# EUROPEAN PATENT APPLICATION

(11) **EP 4 786 833 A1**
(43) Date of publication of application: **05.08.2026**
(21) Application number: 24871972.6
(22) Date of filing: 17.09.2024
(51) Int. Cl.: F16K 31/44, F16K 31/524

(54) **SWITCHING VALVE**

(30) Priority: 25.09.2023 JP 2023160196
(71) Applicant: Eagle Industry Co., Ltd., Minato-ku Tokyo 105-8587 (JP)
(72) Inventor: MATSUZAKI Akitaka, Tokyo 105-8587 (JP); KAWATO Tadanobu, Tokyo 105-8587 (JP); KONDO Shinji, Tokyo 105-8587 (JP); OGAWA Noriyuki, Tokyo 105-8587 (JP); ENOKIJIMA Fuminobu, Kariya-shi, Aichi 448-8671 (JP); TAKEYAMA Yukihiro, Kariya-shi, Aichi 448-8671 (JP)
(74) Representative: WSL Patentanwälte Partnerschaft mbB
(86) International application number: PCT/JP2024/033141
(87) International publication number: WO 2025/070178

(57) **Abstract**

There is provided a switching valve with high durability. A switching valve V includes a housing 10; a valve body 20 rotatably provided inside the housing 10; a drive source 40 including a rod 41 that rotates the valve body 20; and a rotary body 25 that transmits a driving force of the drive source 40 to the valve body 20. The rotary body 25 is provided with, on an outer periphery 25d of the rotary body 25, a recess 50 extending in an axial direction and thick portions 51 and 52 that are wider in a circumferential direction than the recess 50. The rod 41 is provided with ridge portions 42 and 44 that are brought into contact with the thick portions 51 and 52.

## Description

### {TECHNICAL FIELD}

The present invention relates to a switching valve, for example, a switching valve that opens and closes flow passages through which a refrigerant flows or switches between the flow passages.

### {BACKGROUND ART}

In various industrial fields, refrigerant circuits in which a refrigerant supply source is connected to a refrigerant load such as a refrigerant-operated device or a heat exchanger by flow passages are used. Some of such refrigerant circuits may be provided with a switching valve for opening and closing the flow passages or switching between the flow passages.

For example, a switching valve of Patent Citation 1 is mainly composed of a main valve housing, a main valve body, and an actuator. Four ports are formed in the main valve housing. Four communication passages are formed in the main valve body.

The actuator includes a pressure-receiving movable body disposed to be movable in an axial direction. A plurality of drive teeth are formed at the axial center of the pressure-receiving movable body. A plurality of driven teeth are formed on an outer peripheral surface of the main valve body, and the drive teeth and the driven teeth can engage with each other. The main valve body rotates to one side in a circumferential direction when the pressure-receiving movable body is moved to one side in the axial direction, and rotates to the other side in the circumferential direction when the pressure-receiving movable body is moved to the other side in the axial direction. Accordingly, the main valve body is switched to one of a first rotation position and a second rotation position.

The main valve body in the first rotation position communicates a first port with a third port through a first communication passage, and communicates a second port with a fourth port through a second communication passage. In addition, the main valve body in the second rotation position communicates the first port with the second port through a third communication passage, and communicates the third port with the fourth port through a fourth communication passage. In such a manner, the switching valve of Patent Citation 1 can switch between flow passages.

### {CITATION LIST}

### {Patent Literature}

Patent Citation 1: JP 2016-98974 A (Pages 21 and 22, FIG. 21)

### {SUMMARY OF INVENTION}

### {Technical Problem}

Since such a switching valve of Patent Citation 1 is configured to switch a movement direction of the pressure-receiving movable body using the pilot pressure of a solenoid type four-way pilot valve, manufacturing costs can be reduced compared to when the main valve body is rotated by an electric motor. However, in the switching valve as described in Patent Citation 1, since a load is intermittently applied to each tooth in accordance with the movement of the actuator, the teeth are likely to be damaged.

The present invention has been made in view of such a problem, and an object of the present invention is to provide a switching valve with high durability.

### {Solution to Problem}

In order to solve the foregoing problem, a switching valve according to the present invention is a switching valve including a housing; a valve body rotatably provided inside the housing; a drive source including a rod that rotates the valve body; and a rotary body configured to transmit a driving force of the drive source to the valve body, wherein the rotary body is provided with, on an outer periphery of the rotary body, a recess extending in an axial direction and a thick portion that is wider in a circumferential direction than the recess, and the rod is provided with a ridge portion that is brought into contact with the thick portion. According to the feature of the present invention, since a force received from the ridge portion of the rod is received by the thick portion of the rotary body, which is high in strength, the durability of the switching valve can be enhanced.

It may be preferable that the recess has a tapered shape in which an inner-diameter side of the recess is narrower than an outer-diameter side of the recess. According to this preferable configuration, the angle by which the valve body is rotated from when the ridge portion comes into contact with the thick portion until the ridge portion separates from the thick portion can be increased.

It may be preferable that a top portion of the ridge portion is rounded. According to this preferable configuration, the ridge portion exhibits smooth sliding when coming into contact with the thick portion.

It may be preferable that the recess is a slit penetrating through the rotary body in a radial direction. According to this preferable configuration, the angle by which the valve body is rotated from when the ridge portion comes into contact with the thick portion until the ridge portion separates from the thick portion can be increased.

It may be preferable that the rotary body and the valve body are integrally formed from resin. According to this preferable configuration, the driving force of the drive source can be smoothly transmitted to the valve body.

It may be preferable that the rod is a columnar body. According to this preferable configuration, the ridge portion can be kept in stable point contact with the thick portion.

It may be preferable that the rotary body includes a plurality of the thick portions, and the rod includes a plurality of the ridge portions. According to this preferable configuration, the angle by which the valve body is rotated can be increased.

It may be preferable that at least one valley portion that is wider in the axial direction than the thick portion is formed between the adjacent ridge portions. According to this preferable configuration, since at least one thick portion is received in the valley portion, the rotary body can be smoothly operated.

It may be preferable that a trajectory along which the ridge portion moves back and forth is along a tangent line to a trajectory along which the rotary body rotates, and the ridge portion is disposed on a retracted side of the rod relative to a normal line to the trajectory along which the rotary body rotates, the normal line being orthogonal to the tangent line, in a state where the rod is fully retracted. According to this preferable configuration, not only can the efficiency of transmission of the driving force be increased, but the angle by which the valve body is rotated from when the ridge portion comes into contact with the thick portion until the ridge portion separates from the thick portion can also be increased.

### {BRIEF DESCRIPTION OF DRAWINGS}

FIG. 1 is a schematic diagram illustrating a refrigerant circuit to which a switching valve according to an embodiment of the present invention is applied.
FIG. 2 is a perspective view of the switching valve according to the embodiment.
FIG. 3 is a cross-sectional view of the switching valve in a state where a gap between a valve body and a housing is sealed in the embodiment.
FIG. 4 is a cross-sectional view of the switching valve in a state where the valve body is lifted in the embodiment.
FIG. 5 is an enlarged perspective view of a main part of the switching valve according to the embodiment.
FIG. 6 is a view for describing rotation of the valve body in the embodiment.
FIG. 7 is a view for describing rotation of the valve body in the embodiment.
FIG. 8 is a top view illustrating the valve body rotated from a first rotation position to a second rotation position in the embodiment.

### {DESCRIPTION OF EMBODIMENTS}

A mode for implementing a switching valve according to the present invention will be described below based on an embodiment. Hereinafter, a refrigerant switching valve will be described as an example of the switching valve; however, the switching valve may be a valve that switches a fluid other than a refrigerant.

### {Embodiment}

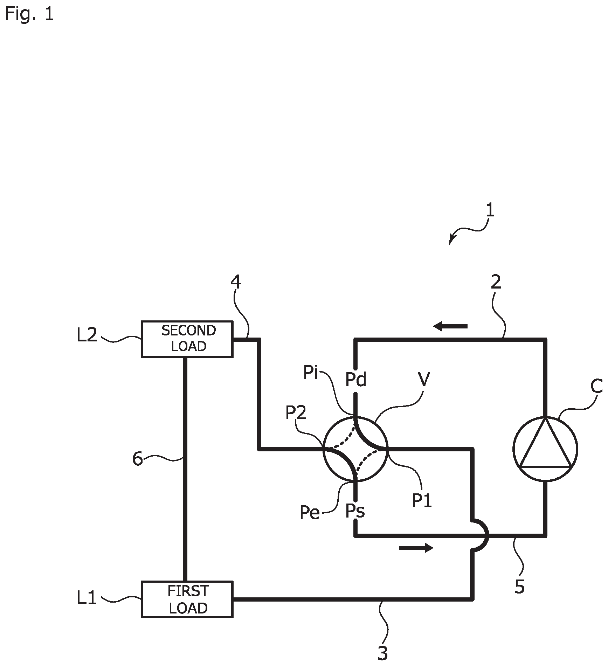

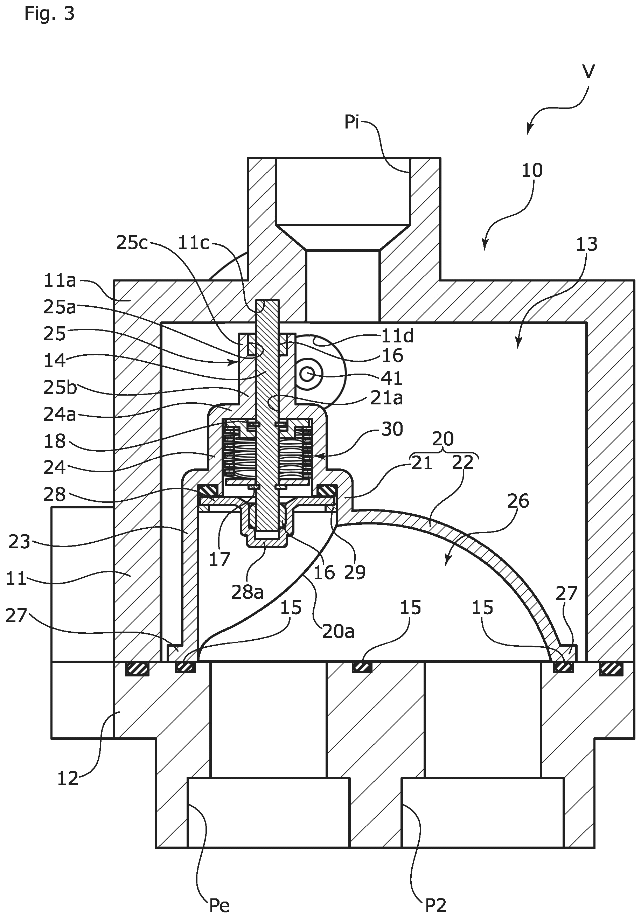

A refrigerant switching valve as a switching valve according to an embodiment of the present invention will be described with reference to FIGS. 1 to 8. Hereinafter, the top and bottom of FIG. 3 will be described as the top and bottom of the refrigerant switching valve.

As illustrated in FIG. 1, a refrigerant switching valve V of the present invention is a four-way valve provided in a refrigerant circuit 1. The refrigerant circuit 1 is provided with a compressor C, a first load L1, and a second load L2, in addition to the refrigerant switching valve V. The compressor C discharges a discharge fluid Pd that is a compressed highpressure refrigerant, and suctions a suction fluid Ps that is a depressurized low-pressure refrigerant.

The refrigerant switching valve V is provided with an inlet port Pi serving as an inlet passage connected to a discharge side of the compressor C through a discharge flow passage 2; a first port P1 connected to the first load L1 through a first flow passage 3; a second port P2 connected to the second load L2 through a second flow passage 4; and an outlet port Pe serving as an outlet passage connected to a suction side of the compressor C through an outlet flow passage 5. The first load L1 and the second load L2 are connected through a third flow passage 6.

The refrigerant switching valve V performs switching such that the discharge fluid Pd delivered from the compressor C passes through the first load L1 and then the second load L2 as illustrated by solid lines or the discharge fluid Pd passes through the second load L2 and then the first load L1 as illustrated by dashed lines. Hereinafter, the refrigerant switching valve V will be described in detail.

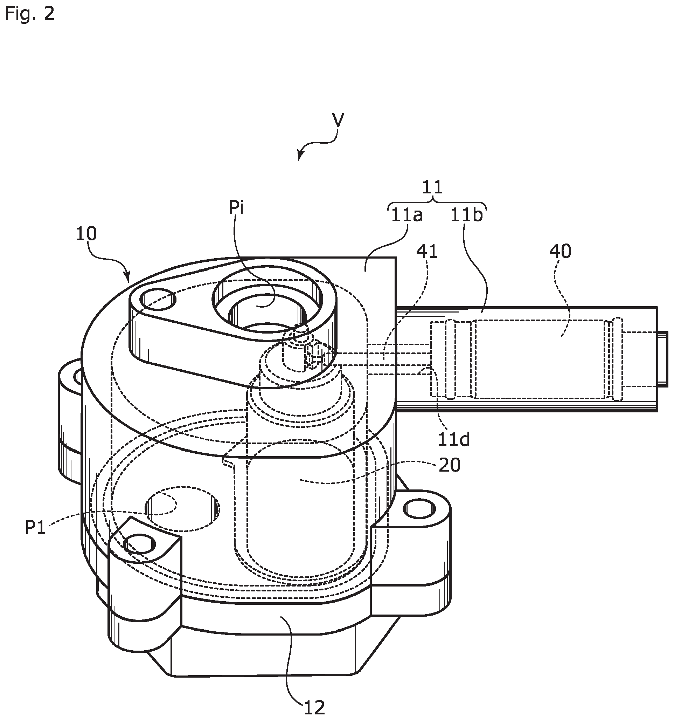

As illustrated in FIGS. 2 and 3, the refrigerant switching valve V is mainly composed of a housing 10, a valve body 20, resilient means 30 (see FIG. 3), and a drive source 40 (see FIG. 2). In FIGS. 2 and 3, the valve body 20 is in a first rotation position, communicates the inlet port Pi with the first port P1 (see FIG. 2), and communicates the second port P2 (see FIG. 3) with the outlet port Pe (see FIG. 3).

The housing 10 is mainly composed of a casing 11 and a stator 12.

Referring to FIG. 2, the casing 11 is made of resin, and is composed of a main body 11a and a socket 11b. Incidentally, the casing 11 may be made of metal, and the material may be changed as appropriate.

The main body 11a has a tubular shape with a ceiling that opens downward, and includes a ceiling having a stepped plate shape that is formed in a D-shape when viewed from above, and a peripheral wall extending downward from a peripheral edge of the ceiling.

The inlet port Pi is formed in the ceiling of the main body 11a so as to penetrate therethrough in an up-down direction.

Referring to FIG. 3, a support hole 11c recessed upward from a lower end surface of the ceiling is formed in the ceiling of the main body 11a. A support shaft 14 is inserted and fixed to the support hole 11c.

Returning to FIG. 2, the socket 11b has a cylindrical shape with a bottom, and protrudes outward from the peripheral wall of the main body 11a. In addition, the drive source 40 is inserted and fixed inside the socket 11b. A gap between the socket 11b and the drive source 40 is sealed by a packing.

In addition, a through-hole 11d is formed in the peripheral wall of the main body 11a and a bottom portion of the socket 11b so as to penetrate therethrough in an axial direction of the socket 11b. A rod 41 to be described later is inserted through the through-hole 11d, and the tip of the rod 41 is disposed in a valve chamber 13 (see FIG. 3).

As illustrated in FIGS. 2 and 3, the first port P1 (see FIG. 2), the second port P2 (see FIG. 3), and the outlet port Pe (see FIG. 3) are formed in the stator 12. The first port P1, the second port P2, and the outlet port Pe all penetrate through the stator 12 in the up-down direction.

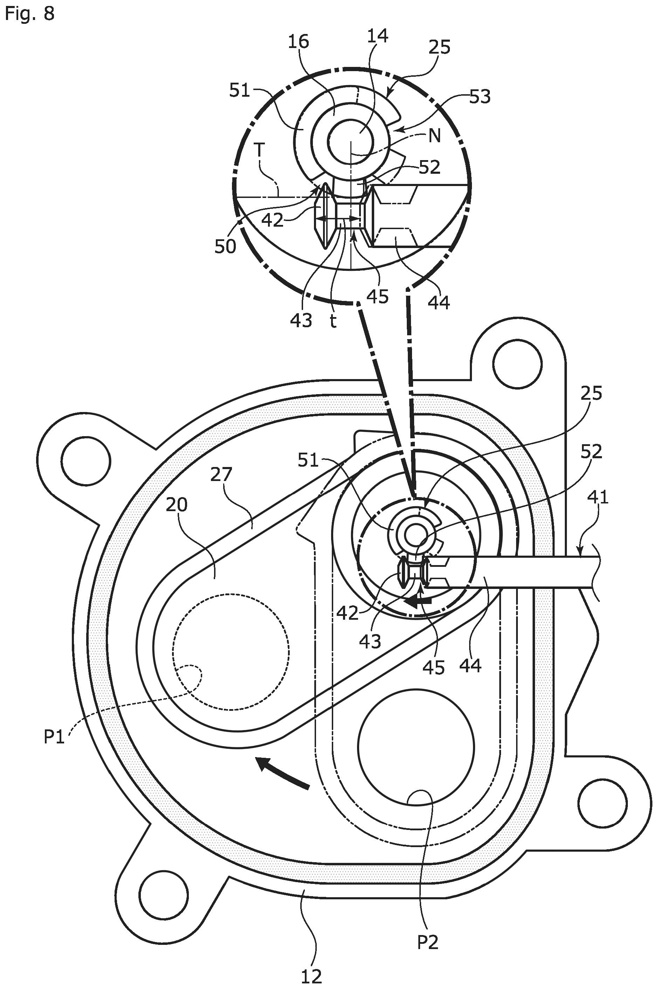

In addition, each of the first port P1, the second port P2, and the outlet port Pe is formed to be located at one of the vertices of an isosceles triangle when the stator 12 is viewed from above (see FIG. 8). A separation dimension between the first port P1 and the outlet port Pe is substantially the same as a separation dimension between the second port P2 and the outlet port Pe.

Referring to FIG. 3, the main body 11a and the stator 12 are fastened together using bolts (not illustrated). In addition, a groove recessed downward from an upper end surface along an edge of the stator 12 is formed in the stator 12. The main body 11a is pressed against a packing disposed in the groove. A gap between the main body 11a and the stator 12 is sealed. The main body 11a and the stator 12 form the valve chamber 13.

In addition, the stator 12 includes a groove formed along a leg portion 27 (to be described later) of the valve body 20 stopped at the first rotation position and the leg portion 27 of the valve body 20 stopped at the second rotation position. The groove is recessed downward from the upper end surface of the stator 12. In addition, a packing 15 is disposed in the groove.

The valve body 20 is made of resin, and is formed in an elliptical shape when viewed from above which includes a cylindrical portion 21 having a circular shape when viewed from above, and a dome portion 22 extending in a U-shape from a lower end portion of the cylindrical portion 21 in a radially outward direction when viewed from above. Incidentally, the valve body 20 may be made of metal, and the material may be changed as appropriate.

The cylindrical portion 21 has a cylindrical shape having steps on an outer-diameter side, and includes a large-diameter tubular portion 23, a small-diameter tubular portion 24, and a rotary body 25.

The large-diameter tubular portion 23 includes a peripheral wall extending in an axial direction, the lower portion of which has a substantially semicircular arc shape when viewed from above and the upper portion of which has a tubular shape, and a ceiling having an annular shape and extending from an upper end of the peripheral wall toward an inner-diameter side. The peripheral wall and the dome portion 22 are connected at an oblique boundary line 20a. The large-diameter tubular portion 23 and the dome portion 22 form a communication passage 26 in which the respective internal spaces of the large-diameter tubular portion 23 and the dome portion 22 are continuous with each other.

In addition, the leg portion 27 having an annular shape and a rectangular cross-section, which is continuous along the edges of the large-diameter tubular portion 23 and the dome portion 22, is formed at the lower ends of the large-diameter tubular portion 23 and the dome portion 22.

A cap 28 having an upside-down hat shape in a cross-sectional view and a stopper 29 having a C-shape are disposed at the upper end of the peripheral wall of the large-diameter tubular portion 23. In a state where the cap 28 is disposed on the ceiling side of the large-diameter tubular portion 23, the stopper 29 is fitted to the peripheral wall to hold the cap 28.

A groove having an annular shape and recessed upward from a lower end surface of the ceiling of the large-diameter tubular portion 23 is formed in the ceiling. The cap 28 is pressed against an O-ring disposed in the groove. A gap between the ceiling and the cap 28 is sealed. Namely, the cap 28 is one of members that define the communication passage 26.

A depression 28a recessed downward from an upper end surface of the cap 28 is formed at the radial center of the cap 28. A bushing 16 serving as a bearing for the support shaft 14 is disposed in the depression 28a.

The small-diameter tubular portion 24 includes a peripheral wall extending upward from an upper end surface at the radial center of the ceiling of the large-diameter tubular portion 23, and a ceiling 24a having an annular shape and extending from an upper end of the peripheral wall toward the inner-diameter side. The ceiling 24a is in contact with an upper spring retainer of the resilient means 30 at the bottom thereof, and the upper spring retainer is in contact with a spring of the resilient means 30 at the bottom thereof. In other words, the valve body 20 is placed on the resilient means 30.

The rotary body 25 having a smaller diameter than the small-diameter tubular portion 24 is formed above the small-diameter tubular portion 24. The rotary body 25 is formed in a cylindrical shape extending upward from an upper end surface at the radial center of the ceiling 24a of the small-diameter tubular portion 24. A depression 25a recessed downward from an upper end surface of the rotary body 25 is formed at the radial center of the rotary body 25. The bushing 16 is disposed in the depression 25a. The rotary body 25 transmits power, and the detailed configuration thereof will be described later.

In addition, a through-hole 21a is formed in the cylindrical portion 21 so as to penetrate therethrough in the axial direction. An axis of the through-hole 21a substantially coincides with an axis of the cylindrical portion 21. In addition, the axis of the through-hole 21a substantially coincides with an axis of each of the depression 25a of the rotary body 25 and the depression 28a of the cap 28. Furthermore, the axis of the through-hole 21a substantially coincides with an axis of the outlet port Pe.

The support shaft 14 is inserted through two bushings 16 and the through-hole 21a. Namely, the support shaft 14 is disposed on the axis of the outlet port Pe. The valve body 20 is movable in the axial direction along the support shaft 14, and is rotatable around the support shaft 14.

A lower stopper 17 and an upper stopper 18 are fixed to a portion of the support shaft 14, which is located inside the valve body 20. The lower stopper 17 is disposed below and spaced apart from the upper stopper 18.

The resilient means 30 is provided between the lower stopper 17 and the upper stopper 18. The resilient means 30 is composed of a lower spring retainer, the spring, and the upper spring retainer. The spring is disposed between the lower spring retainer and the upper spring retainer. The lower spring retainer and the upper spring retainer are prevented from coming off by the lower stopper 17 and the upper stopper 18.

The valve body 20 moves in the axial direction along the support shaft 14 in response to a pressure difference between the inside and outside of the valve body 20.

More specifically, the greater the pressure of the refrigerant in a space outside the valve body 20 in the valve chamber 13 becomes than the pressure of the refrigerant inside the valve body 20, that is, inside the communication passage 26, the greater the force that moves the valve body 20 toward the stator 12 side becomes. When the force exceeds the biasing force of the spring of the resilient means 30, the valve body 20 moves toward the stator 12 side while compressing the spring, and is pressed against the packing 15.

As illustrated in FIG. 3, when the valve body 20 is stopped at the first rotation position, the leg portion 27 is pressed against the packing 15 in a state where the discharge fluid Pd flows into the valve chamber 13 from the inlet port Pi. Accordingly, the refrigerant switching valve V partitions the communication passage 26 and the space outside the valve body 20 in the valve chamber 13 off from each other, communicates the inlet port Pi with the first port P1, and communicates the second port P2 with the outlet port Pe.

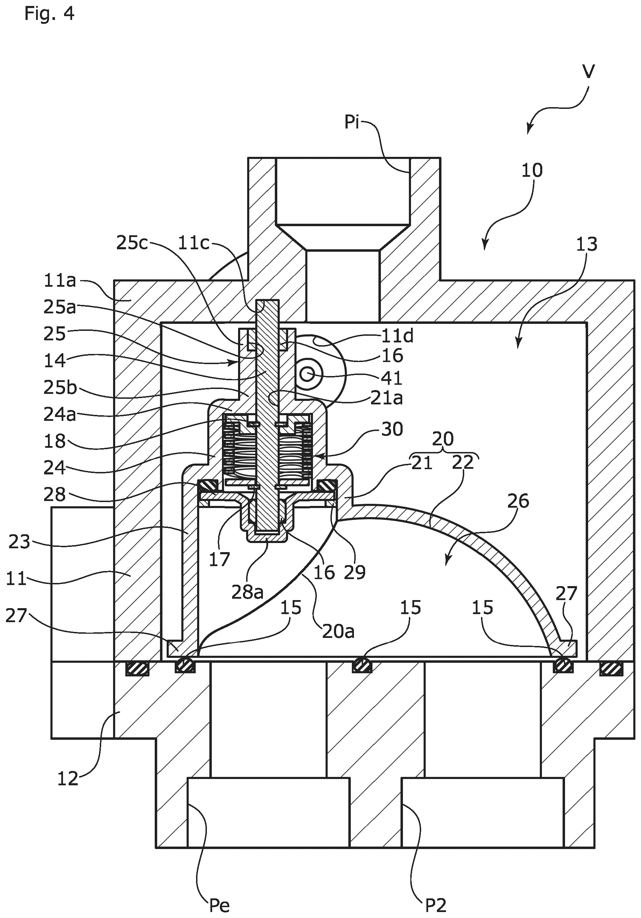

Meanwhile, in a state where the inflow of the discharge fluid Pd into the valve chamber 13 is stopped, the smaller the difference between the pressure of the refrigerant outside the valve body 20 in the valve chamber 13 and the pressure of the refrigerant in the communication passage 26 becomes, the smaller the force that moves the valve body 20 toward the stator 12 side becomes. When the force falls below the biasing force of the spring of the resilient means 30, as illustrated in FIG. 4, the valve body 20 moves in response to the extension of the spring, and is released from the state of being pressed against the packing 15, that is, the valve body 20 is lifted.

In such a manner, by rotating the valve body 20 to the second rotation position in a lifted state, the generation of a large frictional force between the valve body 20 and the packing 15 can be reduced. Hereinafter, the rotation of the valve body 20 will be described.

First, the drive source 40 and the rotary body 25 will be described.

The drive source 40 is a solenoid that advances the rod 41 toward the valve chamber 13 side when energized. In addition, the drive source 40 includes a spring (not illustrated), and when the energization of the drive source 40 is stopped, the rod 41 is retracted toward the drive source 40 side by the biasing force of the spring. Incidentally, the drive source may be configured to retract the rod when energized and to advance the rod using the force of the spring when de-energized.

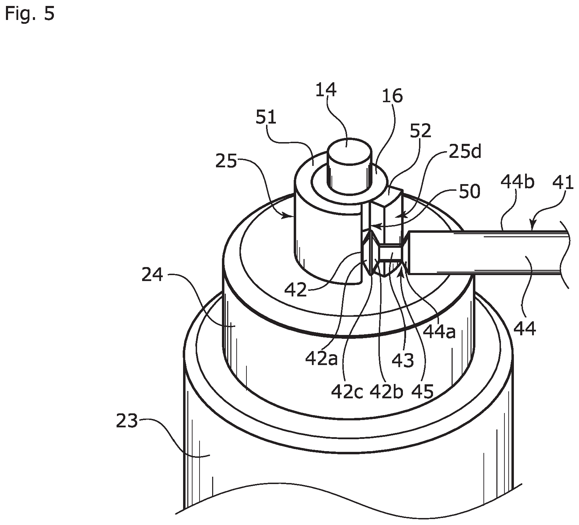

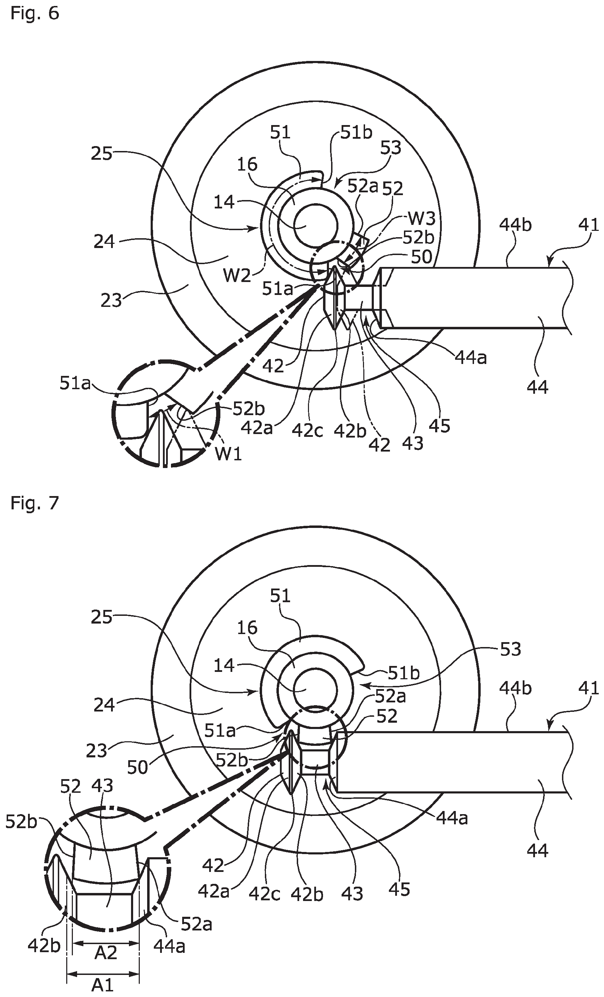

As illustrated in FIGS. 5 and 6, the rod 41 has a columnar body including a first ridge portion 42, a small-diameter shaft portion 43, and a second ridge portion 44. Here, the first ridge portion 42 and the second ridge portion 44 are ridge portions of the present invention, and are brought into contact with a long thick portion 51 or a short thick portion 52 as a thick portion to be described later. Incidentally, in the present embodiment, the outer diameters of the first ridge portion 42 and the second ridge portion 44 are the same, but may be different.

The first ridge portion 42 is formed at the tip of the rod 41. The first ridge portion 42 has inclined surfaces 42a and 42b. The inclined surface 42a is inclined such that the diameter is increased toward an outer-diameter side as the inclined surface 42a extends from a tip side of the rod 41 toward a rear end side, that is, the drive source 40 side. The inclined surface 42b is inclined such that the diameter is reduced toward an inner-diameter side as the inclined surface 42b extends from an outer-diameter end of the inclined surface 42a toward the rear end side. In addition, a top portion 42c of the first ridge portion 42, which is connected to the inclined surfaces 42a and 42b, is rounded.

The small-diameter shaft portion 43 has an outer peripheral surface extending linearly from an inner-diameter end of the inclined surface 42a toward the rear end side.

The second ridge portion 44 is continuous with a rear end of the small-diameter shaft portion 43. The second ridge portion 44 has an inclined surface 44a and an outer peripheral surface 44b. The inclined surface 44a is inclined such that the diameter is increased toward the outer-diameter side as the inclined surface 44a extends from a rear end of the outer peripheral surface of the small-diameter shaft portion 43 toward the rear end side. The outer peripheral surface 44b extends linearly from an outer-diameter end of the inclined surface 44a toward the rear end side.

In addition, a portion sandwiched between the first ridge portion 42 and the second ridge portion 44 in the axial direction forms a valley portion 45 having an annular shape. The valley portion 45 is defined by the inclined surface 42b of the first ridge portion 42, the outer peripheral surface of the small-diameter shaft portion 43, and the inclined surface 44a of the second ridge portion 44.

As illustrated in FIGS. 3 and 4, specifically, the rotary body 25 has a cylindrical shape having a step on the inner-diameter side, which is composed of a base portion 25b and a bushing attachment portion 25c above the base portion 25b.

The base portion 25b is a portion continuous with the ceiling 24a of the small-diameter tubular portion 24 and extending in the axial direction, and forms the through-hole 21a of the valve body 20.

The bushing attachment portion 25c is a portion continuous with an upper end of the base portion 25b and extending in the axial direction. An inner diameter of the bushing attachment portion 25c is larger than an inner diameter of the base portion 25b. An inner peripheral surface of the bushing attachment portion 25c and an upper end surface of the base portion 25b form the depression 25a of the rotary body 25.

In addition, the respective outer peripheral surfaces of the base portion 25b and the bushing attachment portion 25c are continuous with each other in a flush manner.

As illustrated in FIGS. 5 and 6, a recess 50, the long thick portion 51, and the short thick portion 52 are formed on an outer periphery 25d of the rotary body 25. In other words, the long thick portion 51 and the short thick portion 52 remain on both circumferential sides of the recess 50. In addition, the long thick portion 51 and the short thick portion 52 include the base portion 25b and the bushing attachment portion 25c described above. Here, each of the long thick portion 51 and the short thick portion 52 is a thick portion of the present invention, and is wider in a circumferential direction than the recess 50.

The recess 50 is formed in a slit shape penetrating through the rotary body 25 in a radial direction and the axial direction. The recess 50 communicates with the through-hole 21a (see FIGS. 3 and 4) and the depression 25a of the valve body 20.

The long thick portion 51 is a circular arc-shaped portion that takes up approximately half of the rotary body 25. End surfaces 51a and 51b (see FIG. 6) on both circumferential sides of the long thick portion 51 are flat surfaces extending in the radial direction. The end surface 51a is located on a clockwise side, and the end surface 51b is located on a counterclockwise side.

The short thick portion 52 is a circular arc-shaped portion that takes up approximately one-eighth of the rotary body 25. End surfaces 52a and 52b on both circumferential sides of the short thick portion 52 are flat surfaces extending in the radial direction. The end surface 52a is located on the counterclockwise side, and the end surface 52b is located on the clockwise side.

The recess 50 is sandwiched between the end surface 51a of the long thick portion 51 and the end surface 52b of the short thick portion 52, and has a tapered shape in which the inner-diameter side is narrower than the outer-diameter side. Incidentally, the tapered shape in the present invention refers to a shape in which the cross-section sandwiched between inclined surfaces is tapered.

In addition, a circumferential width W3 of the short thick portion 52 is wider than a circumferential width W1 of the recess 50, and is narrower than a circumferential width W2 of the long thick portion 51. Incidentally, the circumferential widths in the present invention refer to circumferential dimensions on the same circle.

In addition, a portion between the end surface 51b of the long thick portion 51 and the end surface 52b of the short thick portion 52 forms a cutout portion 53 penetrating through the rotary body 25 in the radial direction and the axial direction.

When the valve body 20 is rotated from the first rotation position to the second rotation position, first, as described above, the valve body 20 is lifted.

At this time, a part of the rod 41, which includes the first ridge portion 42, specifically, the top portion 42c, is disposed in the recess 50 of the rotary body 25. In addition, as illustrated by a dash-double dotted line in FIG. 6, the inclined surface 42b of the first ridge portion 42 is in contact with the end surface 52b of the short thick portion 52. In addition, the short thick portion 52 is disposed at a position where the base portion 25b (see FIGS. 3 and 4) of the valve body 20 overlaps the first ridge portion 42 in the circumferential direction within the range in which the valve body 20 moves up and down along the support shaft 14.

Accordingly, the rotary body 25 is prevented from unintentionally rotating from the first rotation position, and is less likely to come off from the first ridge portion 42.

When the rod 41 advances, the inclined surface 42a of the first ridge portion 42 comes into contact with the end surface 51a of the long thick portion 51 (see FIG. 6). More specifically, the inclined surface 42a of the first ridge portion 42, specifically, the radial center of the inclined surface 42a comes into contact with the end surface 51a of the long thick portion 51, specifically, an outer-diameter end of the end surface 51a.

The long thick portion 51 pressed by the advancing rod 41 rotates in a clockwise direction as the advancing distance of the rod 41 increases. Accordingly, the position where the first ridge portion 42 comes into contact with the outer-diameter end of the end surface 51a of the long thick portion 51 gradually moves from the radial center of the inclined surface 42a to the top portion 42c. That is, the first ridge portion 42 and the long thick portion 51 come into sliding contact with each other.

When the rod 41 advances further, as illustrated in FIG. 7, the first ridge portion 42 and the long thick portion 51 separate from each other.

Next, the inclined surface 44a of the second ridge portion 44, specifically, the outer-diameter end of the inclined surface 44a comes into contact with the end surface 52a of the short thick portion 52, specifically, an outer-diameter end of the end surface 52a. The short thick portion 52 pressed by the advancing rod 41 rotates in the clockwise direction as the advancing distance of the rod 41 increases. Accordingly, the position where the inclined surface 44a of the second ridge portion 44 comes into contact with the outer-diameter end of the end surface 52a of the short thick portion 52 gradually moves from the outer-diameter end of the inclined surface 44a to the radial center. That is, the second ridge portion 44 and the short thick portion 52 come into sliding contact with each other.

In addition, as illustrated in a callout of FIG. 7, the valley portion 45 of the rod 41 is longer than the short thick portion 52 in the axial direction. Specifically, a minimum axial dimension A1 of the valley portion 45 in a region in which the valley portion 45 overlaps the short thick portion 52 in the axial direction in a state where the short thick portion 52 is disposed in the valley portion 45 is longer than a maximum axial dimension A2 of the short thick portion 52. Accordingly, when the second ridge portion 44 comes into contact with the short thick portion 52, the short thick portion 52 is received in the valley portion 45, so that the rotary body 25 can be smoothly operated.

In addition, the cutout portion 53 of the rotary body 25 prevents the outer peripheral surface 44b of the second ridge portion 44 from coming into contact with the rotary body 25 while the inclined surface 44a of the second ridge portion 44 and the end surface 52a of the short thick portion 52 are in contact with each other.

In addition, the valve body 20 that is integrated with the rotary body 25 also rotates in the clockwise direction together with the rotary body 25. During this time, the ceiling 24a of the valve body 20 comes into sliding contact with the upper spring retainer of the resilient means 30; however, the valve body 20 is placed on the resilient means 30. For this reason, the frictional force generated between the leg portion 27 at the lower end of the valve body 20 and an upper surface of the stator 12 or the packing 15 is reduced. In addition, the valve body 20 is lightweight due to being made of resin, which contributes to reducing frictional force.

Thereafter, the rod 41 advances a predetermined distance, thereby causing the valve body 20 to stop at the second rotation position as illustrated in FIG. 8. Incidentally, in FIG. 8, for convenience of illustration, the illustration of some parts such as the packing 15 is omitted.

The valve body 20 stopped at the second rotation position is pressed against the packing 15 similarly to when the valve body 20 is stopped at the first rotation position.

At this time, the short thick portion 52 of the rotary body 25 is disposed in the valley portion 45 of the rod 41. In addition, referring to FIG. 7, the inclined surface 44a of the second ridge portion 44 is in contact with the end surface 52a of the short thick portion 52. The short thick portion 52 is disposed at a position where the base portion 25b (see FIGS. 3 and 4) overlaps each of the first ridge portion 42 and the second ridge portion 44 in the circumferential direction within the range in which the valve body 20 moves up and down along the support shaft 14.

Accordingly, the rotary body 25 is prevented from unintentionally rotating from the second rotation position, and is prevented from coming off from the first ridge portion 42 and the second ridge portion 44.

In addition, when the valve body 20 moves to the packing 15 side, the short thick portion 52 is guided by the inclined surface 44a of the second ridge portion 44. Accordingly, the refrigerant switching valve V can accurately press the valve body 20 against the packing 15 disposed along the second rotation position.

In a state where the valve body 20 is pressed against the packing 15 at the second rotation position, the refrigerant switching valve V partitions the communication passage 26 and the space outside the valve body 20 in the valve chamber 13 off from each other, communicates the inlet port Pi with the second port P2, and communicates the first port P1 with the outlet port Pe.

When the valve body 20 is rotated from the second rotation position to the first rotation position, the valve body 20 is lifted similarly to when the valve body 20 is stopped at the first rotation position.

When the energization of the drive source 40 is stopped and the rod 41 is retracted by the spring (not illustrated), referring to FIG. 7, the inclined surface 42b of the first ridge portion 42, specifically, the radial center of the inclined surface 42b comes into contact with the end surface 52b of the short thick portion 52, specifically, the outer-diameter end of the end surface 52b.

The short thick portion 52 pressed by the retracting rod 41 rotates in a counterclockwise direction as the retracting distance of the rod 41 increases. Accordingly, the position where the first ridge portion 42 comes into contact with the outer-diameter end of the end surface 52b of the short thick portion 52 gradually moves from the radial center of the inclined surface 42b to the top portion 42c. That is, the first ridge portion 42 and the short thick portion 52 come into sliding contact with each other.

In addition, the valve body 20 that is integrated with the rotary body 25 also rotates in the counterclockwise direction together with the rotary body 25.

Thereafter, as illustrated by a dash-double dotted line in FIG. 6, the rod 41 retracts a predetermined distance, that is, stops at the fully retracted position, thereby causing the valve body 20 to stop at the first rotation position.

When the valve body 20 stopped at the first rotation position moves to the packing 15 side, the short thick portion 52 is guided by the inclined surface 42b of the first ridge portion 42. Accordingly, the refrigerant switching valve V can accurately press the valve body 20 against the packing 15 disposed along the first rotation position.

As described above, in the refrigerant switching valve V of the present embodiment, the recess 50 or the cutout portion 53 formed on the outer periphery 25d of the rotary body 25 formed in a tubular shape and having high strength can bring the first ridge portion 42 or the second ridge portion 44 of the rod 41 into contact with the long thick portion 51 or the short thick portion 52.

In other words, since a force received from the first ridge portion 42 or the second ridge portion 44 is received by the long thick portion 51 or the short thick portion 52 of the rotary body 25, which is high in strength, the durability of the refrigerant switching valve V can be enhanced.

In addition, the first ridge portion 42 or the second ridge portion 44 is brought into contact with the base portion 25b of the long thick portion 51 or the short thick portion 52, the base portion 25b being particularly high in strength. Accordingly, the durability of the refrigerant switching valve V can be further enhanced.

Furthermore, since the base portion 25b is the root side of the rotary body 25 connected to the ceiling 24a of the small-diameter tubular portion 24, the applied load is smaller than in a configuration in which the first ridge portion 42 or the second ridge portion 44 comes into contact with a tip side of the rotary body 25.

In addition, since the recess 50 has a tapered shape, the angle by which the valve body 20 is rotated from when the first ridge portion 42 comes into contact with the long thick portion 51 or the short thick portion 52 until the first ridge portion 42 separates therefrom can be increased.

In addition, since the top portion 42c of the first ridge portion 42 is rounded, the first ridge portion 42 exhibits smooth sliding when coming into contact with the long thick portion 51 or the short thick portion 52.

In addition, since the recess 50 is a slit penetrating through the rotary body 25 in the radial direction, it is possible to secure a wide region in which the first ridge portion 42 overlaps the long thick portion 51 or the short thick portion 52 in the circumferential direction without changing the radial dimension of the rotary body 25. Accordingly, the angle by which the valve body 20 is rotated from when the first ridge portion 42 comes into contact with the long thick portion 51 or the short thick portion 52 until the first ridge portion 42 separates therefrom can be increased.

In addition, since the rotary body 25 and the valve body 20 are integrally formed from resin, the driving force of the drive source 40 can be smoothly transmitted to the valve body 20.

In addition, since the rod 41 has a columnar body, the first ridge portion 42 can be kept in stable point contact with the long thick portion 51 or the short thick portion 52 even when the rod 41 rotates around its axis. Furthermore, since the contact between the first ridge portion 42 and the long thick portion 51 or the short thick portion 52 is point contact, it is easy to reduce the frictional force generated during sliding contact therebetween.

In addition, as when the valve body 20 is rotated from the first rotation position to the second rotation position, the first ridge portion 42 separates from the long thick portion 51, and then the second ridge portion 44 is brought into contact with the short thick portion 52, thereby being able to further rotate the valve body 20. In such a manner, in the refrigerant switching valve V, the angle by which the valve body 20 is rotated can be increased.

In addition, when the rod 41 moves back and forth as indicated by double-headed arrow t in FIG. 8, a trajectory along which the rod 41 moves back and forth, which is illustrated by a dash-dot line, is along a tangent line T to a trajectory along the rotary body 25 rotates, which is illustrated by a dash-dot line.

Furthermore, the first ridge portion 42 illustrated by a dash-double dotted line in FIG. 8 is disposed on a retracted side of the rod 41 relative to a normal line N to the trajectory along which the rotary body 25 rotates, the normal line N being orthogonal to the tangent line T illustrated by a dash-dot line in FIG. 8, in a state where the rod 41 is fully retracted.

Accordingly, not only can the efficiency of transmission of the driving force be increased, but the angle by which the valve body 20 is rotated from when the first ridge portion 42 comes into contact with the short thick portion 52 until the first ridge portion 42 separates therefrom can also be increased.

The embodiment of the present invention has been described above with reference to the drawings; however, the specific configurations are not limited to the embodiment, and modifications or additions that are made without departing from the scope of the present invention are also included in the present invention.

For example, in the embodiment, a configuration in which the drive source is a solenoid has been described; however, the present invention is not limited thereto, and the drive source may be manual or a motor, and may be changed as appropriate.

In addition, in the embodiment, the refrigerant switching valve has been described as a four-way valve, but is not limited thereto, and the number of ports may be changed as appropriate, and the refrigerant switching valve may be an opening and closing valve that opens and closes between the inlet passage and the outlet passage.

In addition, in the embodiment, the valve body and the rotary body have been described as being integrated with each other; however, the present invention is not limited thereto, and the valve body and the rotary body that are separate bodies may be assembled by joining, recess-protrusion fitting, or the like.

In addition, in the embodiment, a configuration in which the valve body rotates around the support shaft has been described; however, the present invention is not limited thereto, and the support shaft and the valve body may be configured to rotate integrally. In such a configuration, the rotary body that is separate from the valve body may be provided on the support shaft.

In addition, in the embodiment, a configuration in which the inclined surface formed on each of the ridge portion extends linearly has been described; however, the present invention is not limited thereto, and the inclined surface may be curved or stepped, or the shape of the inclined surface may be changed as appropriate.

In addition, in the embodiment, a configuration in which the recess communicates with the through-hole or the depression of the valve body has been described; however, the present invention is not limited thereto, and the recess may not communicate with at least one thereof. In such a configuration, the strength of the rotary body can be further ensured.

In addition, in the embodiment, the resilient means has been described as being composed of the lower spring retainer, the spring, and the upper spring retainer; however, the present invention is not limited thereto, and the resilient means may be composed of only the spring, and a thrust bearing may be disposed between the valve body and the upper spring retainer, or the configuration of the resilient means may be changed as appropriate.

In addition, in the embodiment, the packing that seals the gap between the casing and the stator of the housing has been described as being disposed on the stator side; however, the present invention is not limited thereto, and the packing may be disposed on the casing side.

In addition, in the embodiment, the packing that seals the gap between the valve body and the stator has been described as being disposed on the stator side; however, the present invention is not limited thereto, and the packing may be disposed on the valve body side. Even in such a configuration, the packing is lifted together with the valve body and is separated from the stator or the contact area is reduced, so that the frictional force generated between the valve body and the stator can be reduced.

### {REFERENCE SIGNS LIST}

- 1: Refrigerant circuit
- 10: Housing
- 20: Valve body
- 25: Rotary body
- 25d: Outer periphery
- 40: Drive source
- 41: Rod
- 42: First ridge portion (ridge portion)
- 42c: Top portion
- 44: Second ridge portion (ridge portion)
- 45: Valley portion
- 50: Recess
- 51: Long thick portion (thick portion)
- 52: Short thick portion (thick portion)
- V: Refrigerant switching valve (switching valve)

## Claims

1. A switching valve, comprising:
a housing;
a valve body rotatably provided inside the housing;
a drive source including a rod that rotates the valve body; and
a rotary body configured to transmit a driving force of the drive source to the valve body,
wherein the rotary body is provided with, on an outer periphery of the rotary body, a recess extending in an axial direction and a thick portion that is wider in a circumferential direction than the recess, and
the rod is provided with a ridge portion that is brought into contact with the thick portion.

2. The switching valve according to claim 1,
wherein the recess has a tapered shape in which an inner-diameter side of the recess is narrower than an outer-diameter side of the recess.

3. The switching valve according to claim 1,
wherein a top portion of the ridge portion is rounded.

4. The switching valve according to claim 1,
wherein the recess is a slit penetrating through the rotary body in a radial direction.

5. The switching valve according to claim 1,
wherein the rotary body and the valve body are integrally formed from resin.

6. The switching valve according to claim 1,
wherein the rod is a columnar body.

7. The switching valve according to any one of claims 1 to 6,
wherein the rotary body includes a plurality of the thick portions, and
the rod includes a plurality of the ridge portions.

8. The switching valve according to claim 7,
wherein at least one valley portion that is wider in the axial direction than the thick portion is formed between the adjacent ridge portions.

9. The switching valve according to claim 1,
wherein a trajectory along which the ridge portion moves back and forth is along a tangent line to a trajectory along which the rotary body rotates, and
the ridge portion is disposed on a retracted side of the rod relative to a normal line to the trajectory along which the rotary body rotates, the normal line being orthogonal to the tangent line, in a state where the rod is fully retracted.
